# EUROPÄISCHE PATENTANMELDUNG

(11) **EP 1 321 181 A2**
(43) Veröffentlichungstag der Anmeldung: **25.06.2003**
(21) Anmeldenummer: 02028588.8
(22) Anmeldetag: 20.12.2002
(51) Int. Cl.: B01J 3/00, B01J 19/12

(54) **Vorrichtung zum Verschliessen mehrerer Aufschlussbehälter**

(30) Priorität: 20.12.2001 DE 20120649 U; 03.05.2002 DE 20207013 U
(71) Anmelder: MLS MIKROWELLEN-LABOR-SYSTEME GmbH, D-88299 Leutkirch (DE)
(72) Erfinder: Lautenschläger, Werner, 88299 Leutkirch (DE)
(74) Vertreter: Rupp, Christian, Dipl.Phys.

(57) **Zusammenfassung**

Die Erfindung betrifft eine Vorrichtung 51 zum Verschließen mehrerer Aufschlussbehälter 1, deren Öffnung jeweils durch einen Deckel 3 abgedeckt ist, mit einer Mehrzahl Stellplätze 53 für die Aufschlussbehälter 1, wobei die Stellplätze 53 auf einer Umfangsreihe R1 verteilt angeordnet werden können und von außen zugänglich sind, und einer Mehrzahl Verschlussvorrichtungen 73 zum Drücken der Deckel 3 gegen die Behälter. Um die Aufnahmekapazität der Vorrichtung 1 bzgl. der Anzahl der Aufschlussbehälter 1 zu verbessern, sind von den Stellplätzen 53 nach innen versetzt weitere innere Stellplätze 53 angeordnet.

## Beschreibung

Die Erfindung betrifft eine Vorrichtung nach dem Oberbegriff des Anspruchs 1 oder 6.

Zur Durchführung einer Analyse von Stoffen ist es bekannt, einen oder mehrere Stoffe, z. B. ein festes oder flüssiges Probematerial, in einem Aufschlussbehälter zu erhitzen, wodurch in den meisten Aufschlussfällen im Aufschlussbehälter ein Überdruck entsteht, der wiederum den Aufschluss des Probematerials oder dergleichen begünstigt.

Eine Vorrichtung dieser Art, dient zum Beispiel dem Aufschließen, der Elementenanalyse oder dem Entwässern von den einem oder mehreren Behältern angeordneten Probematerial durch Erhitzung, wobei durch die Erhitzung der Druck in den Behältern ansteigt.

Die Erhitzung erfolgt vorzugsweise durch die Bestrahlung mit Mikrowellen in einem Mikrowellengerät.

Eine Vorrichtung dieser Art ist zum Beispiel in der EP 0 830 891 A1 beschrieben. Bei dieser vorbekannten Vorrichtung sind eine Mehrzahl Stellplätze für die Aufschlussbehälter in Segmentträgern angeordnet, derart keilförmige Seitenflächen aufweisen, dass die segmentförmige Flächen besitzen und bei ihrer Anordnung nebeneinander einen im Wesentlichen geschlossenen Segmentträger- Ring bilden. Die Segmentträger weisen einen seitlich zugänglichen Hohlraum auf, der einen Stellplatz für einen Aufschlussbehälter bildet, wobei im oberen Bereich des Hohlraums jeweils eine einstellbare Druckvorrichtung zum Drücken des Deckels gegen den zugehörigen Behälter angeordnet ist. In die Druckvorrichtung ist ein elastisches Druckmittel so integriert, dass dann, wenn im Aufschlussbehälter ein Druck entsteht, der einen bestimmten Druckwert übersteigt, eine Druckablassöffnung selbsttätig geöffnet wird.

Um mit einer vorliegenden Vorrichtung zum einen leistungsfähig und zum anderen eine Vielzahl Proben oder auch unterschiedliche Proben gleichzeitig behandeln zu können, besteht die Forderung nach einer großen Anzahl Aufschlussbehälter oder großen Kapazität zur Aufnahme von Probenmaterial.

Der Erfindung liegt deshalb die Aufgabe zu Grunde, eine Vorrichtung der eingangs angegebenen Art hinsichtlich ihrer Aufnahmekapazität für Aufschlussbehälter bzw. für Probenmaterial zu verbessern.

Diese Aufgabe wird durch die Merkmale der Ansprüche 1 oder 6 gelöst.

Beiden erfindungsgemäßen Lösungen liegt die Erkenntnis zugrunde, dass die Aufnahmekapazität durch eine vergrößerte Raumausnutzung für die Stellplätze der Aufschlussbehälter erreicht werden kann. In beiden Fällen soll mehr Platz für Stellplätze geschaffen werden. Dabei kann Platz sowohl für ein größeres Volumen insgesamt der Aufschlussbehälter als auch für eine größere Anzahl für Aufschlussbehälters geschaffen werden.

Bei der erfindungsgemäßen Ausgestaltung nach Anspruch 1 wird das Ziel dadurch erreicht, dass die Stellplätze in einer äußeren und einer radial nach innen versetzten innerhalb der Stellplätze angeordnet sind. Diese Ausgestaltung ermöglichet es, auch den innerhalb der äußeren Reihe vorhandenen Raum der Vorrichtung für Stellplätze und Probenbehälter auszunutzen, wodurch eine wesentlich größere Anzahl Probenbehälter angeordnet werden kann, in denen gleichzeitig Probenmaterial behandelt werden kann. Hierdurch lässt sich die Leistungsfähigkeit der Vorrichtung steigern.

Diese Vorteile gelten auch für die Ausgestaltung nach Anspruch ..., bei der die Segmentform eines Bodensegments für wenigstens drei Stellplätze ausgenutzt wird. Wenigstens drei Stellplätze lassen sich wegen der vorhandenen Segmentform sehr vorteilhaft anordnen, wobei unter Berücksichtigung der Position des Segmentträgers bzgl. einer für alle Segmentträger gemeinsame Mittelachse zwei Stellplätze außen und ein Stellplatz innen gut anordnen lassen. Die Anzahl der Stellplätze lässt sich durch eine längere Ausbildung der Segmentform des Segmentträgers weiter vergrößern. Hierbei ergeben sich - wie bereits bei der Erfindung nach Anspruch 1 - radial äußere Stellplätze und radial nach innen versetzte innere Stellplätze.

Insbesondere bei einer solchen Vorrichtung, bei der die Aufschlussbehälter einen verhältnismäßig großen Deckel aufweisen, der auf dem Rand des Aufschlussbehälters aufliegt, ergeben sich im Betrieb der Vorrichtung beträchtliche Deckelkräfte, die die Verschlussvorrichtung aufnehmen muss. Hierdurch ergibt sich, dass eine Bedienungsperson große Handkräfte aufbringen muss, um die Verschlussvorrichtung mit der gewünschten Vorspannung einzustellen.

Der Erfindung liegt deshalb im weiteren die Aufgabe zugrunde, eine Vorrichtung nach dem Oberbegriff des Anspruchs 9 so weiterzubilden, dass die Deckel der Aufschlussbehälter leichter verschlossen werden können.

Diese Aufgabe wird durch die Merkmale des Anspruchs 9 gelöst. Vorteilhafte Weiterbildungen der Erfindung sind in den zugehörigen Unteransprüchen beschrieben.

Bei der Ausgestaltung nach Anspruch 9 nimmt ein durch ein Wälzlager gebildetes Axiallager die Verschlusskräfte auf. Ein Wälzlager zeichnet sich durch Leichgängigkeit auch unter verhältnismäßig großen Belastungen aus. Auch die beim Einstellen der verhältnismäßig großen Verschlusskraft auftretenden Axialkräfte nimmt das Wälzlager auf, ohne seine Leichtgängigkeit zu verlieren. Deshalb kann die von der Bedienungsperson aufgebrachte Verstell- oder Einstellkraft mit der gewünschten Verschlussspannung des bzw. der Deckel zugute kommen.

Eine Vorrichtung der im Oberbegriff des Anspruchs 1 angegebenen Art und zur Durchführung der eingangs angegebenen Maßnahmen ist in der EP 0830 891 A1 beschrieben. Bei dieser gattungsgemäßen Ausgestaltung ist ein zwischen einem Schraubteil und einem Druckstempel wirksames elastisches Druckmittel durch einen Stapel übereinander angeordneter metallischer Tellerfedern gebildet, wobei der Druckstempel als U-förmiges Bauteil gebildet ist, in dem ein domförmiges Käfigteil angeordnet ist, das aus Metall besteht und einen Faraday'scher Käfig für die Tellerfedern bildet. Diese Vorrichtung ist vielgliedrig und von großer, insbesondere hoher Bauweise.

Eine Vorrichtung zum Verschließen eines topfförmigen Aufschlussbehälters nach dem Oberbegriff des Anspruchs 7 ist in der GB 2 184 040 A beschrieben. Bei dieser vorbekannten Vorrichtung ist der Druckstempel, das Schraubteil und das dazwischen angeordnete elastische Druckmittel in einem hutförmigen Schraubdeckel eines topfförmigen Stützbehälters aufgenommen, in dem ein Aufnahmebehälter passend eingesetzt ist, gegen dessen Deckel der Druckstempel wirksam ist. Das Schraubteil ist mit einem Druckstück in einem vertikalen Führungsloch im Schraubdeckel vertikal verschiebbar geführt und als Mutter ausgebildet, die auf einem sich vom Druckstempel koaxial nach oben erstreckenden Druckstück in einem Führungsloch durchfassenden Gewindeschaft aufgeschraubt ist. In der Ringwand des hutförmigen Schraubdeckels ist im aufgeschraubten Zustand in der Höhe des oberen Randes des Stützbehälters eine Innenringnut angeordnet von der sich ein Entlüftungskanal radial nach außen durch die Ringwand erstreckt. Die vorbekannte Ausgestaltung ist vielgliedrig, von großer Bauweise, aufwendig in der Herstellung und zeitaufwendig bei der Handhabung. Es besteht auch die Gefahr, dass das Druckstück und die Mutter sich z. B. auf Grund von Verschmutzungen voneinander entfernen, wodurch sich unterschiedliche Druckbereiche beim Öffnen und Schließen des Deckels des Aufnahmebehälters ergeben.

Der Erfindung liegt die Aufgabe zu Grunde, eine Vorrichtung der eingangs angegebenen Arten zu vereinfachen und so auszubilden, dass eine kleine oder niedrige Bauweise erreicht wird. Darüber hinaus ist die Vorrichtung hinsichtlich ihrer Funktion zu verbessern. Außerdem ist angestrebt, die Anzahl der Einzelteile der Vorrichtung und deren Materialaufwand zu verringern.

Diese Aufgabe wird durch die Merkmale des Anspruchs 1 oder 7 gelöst. Vorteilhafte Weiterbildungen der Erfindung sind in den Unteransprüchen beschrieben.

Bei der erfindungsgemäßen Vorrichtung nach Anspruch 1 übergreifen der Druckstempel und das Schraubteil einander muffenförmig mit wenigstens einer Ringwand, die Teil des Druckstempels sein kann, die sich von diesem vorzugsweise einteilig nach oben erstreckt und das Schraubteil muffenförmig übergreift, oder die Teil des Schraubteils sein kann, das sich von diesem vorzugsweise einteilig nach unten erstreckt und den Druckstempel muffenförmig übergreift. Es ist auch möglich, dass zwei Umfangswände vorgesehen sind, von denen sich die eine Ringwand vom Druckstempel aufwärts und die andere Ringwand vom Schraubteil abwärts erstreckt und die Ringwände einander muffenförmig übergreifen. Hierdurch lässt sich nicht nur eine Führung und/oder radiale Abstützung für den Druckstempel erreichen, sondern der das elastische Druckmittel aufnehmende Innenraum zwischen dem Druckstempel und dem Schraubteil wird durch die wenigstens eine Ringwand geschlossen, so dass Verunreinigungen weder bei einer den Deckel des Aufnahmegefäßes hebenden Überdruckreaktion vom Aufnahmeraum des Aufnahmebehälters her noch sonstige Verunreinigungen aus der Umgebung der Vorrichtung in den Innenraum für das elastische Druckmittel gelangen können. Hierdurch ist der Innenraum auch vor aggressiven Behandlungs- bzw. Aufschlusschemikalien geschützt, wodurch die Bewegungsfunktion der Vorrichtung geschützt wird und eine lange Lebensdauer erreicht wird. Bei einer Gewindeführung handelt es sich in beiden axialen Bewegungsrichtungen um eine Zwangsführung, die bei einer Verstellung auch dann zu einer sicheren Verstellung des Schraubteils führt, wenn eine gewisse Schwergängigkeit in der Führung vorliegt.

Die Abdichtung zwischen dem Druckstempel und dem Schraubteil lässt sich dadurch verbessern, dass zwischen dem muffenförmig zusammenwirkenden Führungsflächen eine Dichtung angeordnet ist, vorzugsweise eine Ringdichtung, bei der es sich z. B. um einen O-Ring handeln kann, der in einer Außenringnut des übergriffenen Teils oder in einer Innenringnut des übergreifenden Teils eingesetzt sein kann.

Im Rahmen der Erfindung gibt es viele Möglichkeiten zur Abstützung des Schraubteils an einem Widerlager. Ein solches Widerlager kann z. B. durch eine abgestützte Scheibe gebildet sein, die einen Standplatz für den Aufschlussbehälter in einem mit Mikrowellen beaufschlagbarem Raum übergreift. Wenn eine solche Scheibe nach allen Seiten offen ist, kann sie auch dazu dienen, mehrere auf den Umfang verteilt angeordnete Standplätze für Aufschlussbehälter mit der Vorrichtung zu überdecken. Dabei kann in an sich bekannter Weise die Scheibe eine Drehscheibe sein, die mit den Standplätzen drehbar im Mikrowellenraum gelagert ist.

Das Widerlager kann auch durch die Deckenwand eines einen Standplatz für einen Aufschlussbehälter zu beiden Seiten unterseitig und überseitig begrenzenden Druckaufnahmekörpers gebildet sein. Bei dieser Ausgestaltung lässt sich der Aufschlussbehälter gegebenenfalls mit der Vorrichtung von einer Seite her auf den Standplatz stellen und wieder entfernen.

Das Schraubteil weist vorzugsweise ein Außengewinde auf. Es kann in ein Ortsfest abgestütztes Wiederlager eingeschraubt oder einschraubbar sein, wobei sich unter dem Schraubteil und dem Druckstempel ein Standplatz für den Aufschlussbehälter befindet, und wobei vorzugsweise das Wiederlager durch die Deckenwand eines den Standplatz aufweisenden kastenförmigen Gehäuses gebildet ist.

Der Druckstempel kann mit einer zylindrischen Gleitfläche an einer hohlzylindrischen Gleitfläche des Schraubteils axial gleitbeweglich geführt sein, wobei in der zylindrischen Gleitfläche des Druckstempels eine oder mehrere einen axialen Abstand voneinander aufweisende Ringnuten angeordnet sind.

Der Druckstempel weist eine U-förmige Querschnittsform auf, und das elastische Druckmittel ist in der durch die U-förmige Querschnittsform gebildeten Ausnehmung angeordnet.

Im Druckstempel ist ein vorzugsweise co-axiales Loch angeordnet. Das Schraubteil weist in seinem oberen Bereich einen Führungsabschnitt für einen vom Druckstempel einteilig ausgehenden und darauf angeordneten Fortsatz auf. Außerdem weist das Schraubteil an seinem oberen Ende ein Drehangriffselement, z.B. eine oberseitig offene unrunde Ausnehmung für ein Drehwerkzeug auf.

Das Verschlussteil ist ein Schraubteil, das in einem über dem Aufschlussbehälter angeordneten Wiederlager eingeschraubt und gegen den Deckel schraubbar ist, wobei das Schraubteil eine Führung für den Ventilkörper bildet und das Schraubteil eine Hülse ist, in die sich der Ventilkörper hineinerstreckt, wobei die Feder in der Hülse angeordnet ist. Am unteren Rand der Hülse ist ein die Aufschubbewegung des Ventilkörpers begrenzender Anschlag angeordnet, der vorzugsweise durch einen am unteren Rand der Hülse insbesondere lösbar befestigten Flansch gebildet ist. Der Ventilkörper ist lösbar mit einer Ventilkörperbasis verbunden, vorzugsweise durch eine Schraubverbindung.

Es ist des weiteren gemäß Anspruch 7 möglich, das Widerlager an der Mantelfläche des Aufschlussbehälters auszubilden oder daran abzustützen. Hierzu kann das Schraubteil durch die Deckenwand einer Kappe gebildet sein, deren Ringwand, z. B. in ihrem freien Randbereich, mit dem Aufschlussbehälter verbindbar ist, z. B. durch Schrauben. Hierbei ist es besonders vorteilhaft, wenn ein Schraubring mit Außengewinde auf die Mantelfläche des Aufschlussbehälters aufgesetzt ist und an diesem abgestützt ist, vorzugsweise an der Unterseite eines Flansches im Randbereich des Aufschlussbehälters, so dass der Flansch die Stützkräfte der Vorrichtung aufnimmt und eine Positionierung des Schraubringes durch Anlage gewährleistet. Diese Ausgestaltung zeichnet sich besonders durch eine kleine Bauweise aus, die wenig Bauraum beansprucht, handlich ist, wenig Material verbraucht und außerdem von geringem Gewicht ist.

Es ist möglich und vorteilhaft, bei allen Ausgestaltungen eine Markierung oder eine Skala so zwischen dem Schraubteil oder Anbauteilen desselben und dem Widerlager anzuordnen, dass das Schraubteil bezüglich der elastischen Schließkraft des Druckmittels so in Stufen oder stufenlos voreinstellbar ist, das ein bestimmter Öffnungsdruck erreicht wird, bei dessen Übersteigung im Aufschlussraum des Aufschlussbehälters dessen Deckel selbsttätig abhebt und somit öffnet. Hierdurch kann die Bedienungsperson unter Berücksichtigung des oder der zu behandelnden Stoffe gewünschte maximale Innendrücke im Aufnahmeraum des Aufnahmegefäßes vorbestimmen.

Wenn bei einer Vorrichtung der vorliegenden Art der Deckel des Aufschlussbehälters einen Ventilkörper eines Ventils bildet, das bei einem vorbestimmten Behälterinnendruck aufgrund der Nachgiebigkeit des elastischen Druckmittels öffnet, steht eine verhältnismäßig große Druckfläche an der Innenseite des Deckels zur Verfügung, und deshalb ist auch eine verhältnismäßig große Vorspannkraft erforderlich, um den Deckel in seiner Verschlussstellung auf dem Aufschlussbehälter zu halten. Folglich bedarf es auch eines verhältnismäßig großen Kraftaufwandes, die Vorspannkraft zu verändern und dadurch den Innendruckwert einzustellen, bei dessen Überschreitung der Deckel selbsttätig öffnen soll. Außerdem kann als nachteilig angesehen werden, dass bei einer solchen Überdrucköffnung des Deckels die eigentliche Öffnungs- und Abblasstelle unbestimmt ist und sich über einen unbestimmten Bereich des Umfangs oder über den gesamten Umfangsbereich erstrecken kann.

Der Erfindung liegt im weiteren die Aufgabe zugrunde, eine Vorrichtung nach dem Oberbegriff des Anspruchs 18, bei dem der Aufschlussbehälter öffnen soll, mit geringem Kraftaufwand einstellbar ist. Es soll auch erreicht werden, die Vorrichtung so auszugestalten, dass beim Abblasen des Aufschlussbehälters bei einem einen bestimmten Wert übersteigenden Innendruck das Abblasen gezielt an einer bestimmten Stelle erfolgt.

Diese Aufgabe wird durch die Merkmale des Anspruchs 18 gelöst.

Vorteilhafte Weiterbildungen der Erfindung sind in den zugehörigen Unteransprüchen beschrieben.

Bei der erfindungsgemäßen Vorrichtung nach Anspruch 18 weist der Deckel einen ihn durchsetzenden Auslasskanal auf, der durch ein Ventil geschlossen ist, das bei einem einen bestimmten Wert übersteigenden Innendruck im Aufschlussbehälter selbsttätig öffnet.

Bei dieser Ausgestaltung ist ein besonderes Ventil im Bereich des Deckels vorhanden, das bei einem einen bestimmten Druckwert übersteigenden Behälterinnendruck selbsttätig öffnet, wobei der Deckel in seiner Verschlussstellung verbleibt. Bei dieser Ausgestaltung ist die Größe der Öffnung des Aufschlussbehälters nicht relevant, sondern die Größe des Auslasskanals, die wesentlich kleiner ist als die Öffnungsgröße des Aufschlussbehälters bzw. die Größe des Deckels. Deshalb bedarf es auch einer wesentlich geringeren Vorspannkraft zum Schließen des Ventils, und es können Veränderungen dieser Vorspannkraft mit einem verhältnismäßig geringen Kraftaufwand handhabungsfreundlich durchgeführt werden, so dass der Handhabungskomfort der erfindungsgemäßen Vorrichtung wesentlich verbessert ist.

Außerdem ist bei der erfindungsgemäßen Ausgestaltung nach Anspruch 18 die Abblasstelle auf die Mündungsöffnung des Auslasskanals beschränkt. Da bei einem Abblasvorgang auch Probematerial austreten kann und hierdurch Verunreinigungen stattfinden können, lassen sich bei dieser Ausgestaltung Maßnahmen zur Verhinderung bzw. Beseitigung von Verunreinigungen einfacher und gezielter anordnen bzw. durchführen.

Weitere Weiterbildungen der Erfindung führen zu einfachen, kleinen und funktionsfähigen Bauweisen, und sie dienen der Verhinderung einer Verunreinigung des Ventilmechanismus und einer gezielten und handhabungsfreundlichen Einstellung unterschiedlicher Druckwerte, bei denen das Ventil öffnet.

Nachfolgend werden vorteilhafte Ausgestaltungen der Erfindung anhand von mehreren Ausführungsbeispielen und Zeichnungen näher erläutert. Es zeigt
- Fig. 1: eine Behälteranordnung mit einer erfindungsgemäßen Vorrichtung zum Verschließen eines Aufschlussbehälters im vertikalen Schnitt;

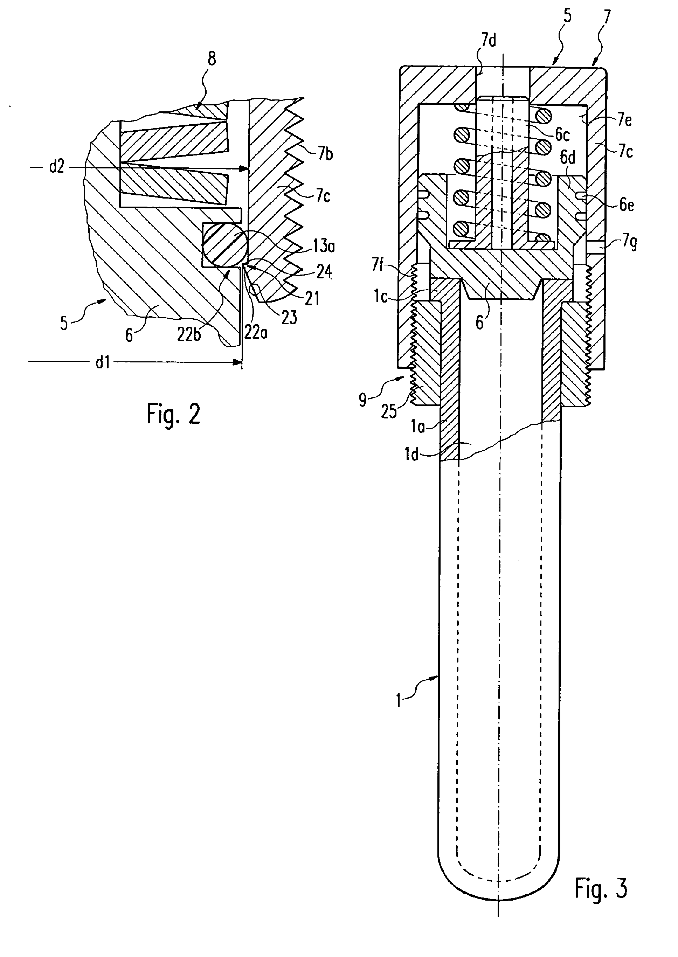

- Fig. 2: die in Fig. 1 mit X gekennzeichnete Einzelheit in vergrößerter Darstellung;
- Fig. 3: eine abgewandelte Behälteranordnung mit einer ebenfalls abgewandelte Vorrichtung zum Verschließen eines Aufschlussbehälters im vertikalen Schnitt;
- Fig. 4: eine Behälteranordnung mit einer erfindungsgemäßen abgewandelten Vorrichtung zum Verschließen eines Aufschlussbehälters im vertikalen Schnitt;
- Fig. 5: ein Mikrowellengerät mit einer erfindungsgemäßen Vorrichtung zum Verschließen mehrerer Aufschlussbehälter im Strahlungsraum des Mikrowellengerätes in schematischer Darstellung;
- Fig. 6: den Halbschnitt VI-VI in Fig. 8 in vergrößerter Darstellung;
- Fig. 7: den Halbschnitt VII-VII in Fig. 8 in vergrößerter Darstellung;
- Fig. 8: die Vorrichtung in schematischer Draufsicht.

Ein topfförmiger Aufschlussbehälter 1 mit einer hohlzylindrischen und z. B. verhältnismäßig dünnen Umfangswand 1a sowie einer ebenen Bodenwand 1b ist von einem hohlzylindrischen Stützmantel 2 umgeben und radial nach außen gestützt, der sich bis zu einem Flansch 1c am oberen Rand der Umfangswand 1a erstrecken kann, so dass der Flansch 1c auf der oberen Stirnseite des Stützmantels 2 aufliegt.

Die oberseitige Öffnung des Aufschlussbehälters 1 ist durch einen z. B. flachen und stufenzylindrischen Deckel 3 (Aufsitzdeckel) zu verschließen und zu öffnen, der beim Ausführungsbeispiel mit einem unterseitigem zylindrischen Deckelansatz 3a mit geringem Bewegungsspiel in den Aufschlussbehälter 1 einfasst und vorzugsweise durch eine Ringdichtung 4 abgedichtet ist. Diese kann durch einen O-Ring 4a gebildet sein, der in einer Ringnut in der Mantelfläche des Deckelansatzes 3a sitzt. Der Deckel 3 liegt deshalb mit seiner Schulterfläche 3b auf dem Flansch 1c auf.

Die in ihrer Gesamtheit mit 5 bezeichnete Vorrichtung zum Verschließen des Aufschlussbehälters 1 auch beim Vorhandensein eines Überdruckes in dessen Aufschluss-Innenraumes 1d besteht hauptsächlich aus 3 Teilen nämlich einem Druckstempel 6, einem wenigstens teilweise darüber angeordneten Schraubteil 7 und einem elastischem Druckmittel 8, das zwischen einer nach oben gerichteten Stützfläche 6a am Druckstempel 6 und einer nach unten gerichteten Stützfläche 7a am Schraubteil 7 angeordnet ist und im Funktionsbetrieb mit einer bestimmten Kompressionskraft vorgespannt ist. Beim Ausführungsbeispiel besteht das Druckmittel 8 aus mehreren gegensinnig aufeinandergestapelten Tellerfedern. Das Schraubteil 7 weist wenigstens in seinem oberen Bereich ein Außengewinde 7b auf, mit dem es in eine Gewindebohrung 9a eines Wiederlagers 9 als Schraubteil eingeschraubt ist. Zum Drehen des Schraubteils 7 ist an seiner Oberseite ein Drehangriffselement 11 für ein damit formschlüssig in Drehverbindung bringbares Drehwerkzeug angeordnet. Beim Ausführungsbeispiel ist das Drehangriffselement 11 durch eine unrunde Steckausnehmung gebildet.

Um den vom Druckmittel beanspruchten Raum 12 abzudecken und somit vor Verschmutzung zu schützen, ist eine den Raum 12 umgebende Ringwand 7c vorgesehen, mittels der der Druckstempel 6 und/oder das Schraubteil 7 wenigstens teilweise muffenförmig übergriffen sind. Beim Ausführungsbeispiel erstreckt sich die vorzugsweise hohlzylindrische Ringwand 7c einteilig vom Schraubteil 7 nach unten, wobei sie die vorzugsweise zylindrische Umfangsfläche des Druckstempels 6 mit Bewegungsspiel wenigstens teilweise übergreift, wodurch der Raum 12 seitlich unzugänglich ist.

Das vertikale Übergreifmaß a kann so groß bemessen sein, dass beim noch zu beschreibenden Teleskopieren der Vorrichtung 5 eine Führungsfunktion zwischen dem Druckstempel 6 und dem Schraubteil 7 und/oder eine Ringdichtung 13 gewährleistet ist. Vorzugsweise ist im Übergreifsspalt ein Dichtring 13a angeordnet, z. B. ein O - Ring, der in einer Ringnut in der Mantelfläche des Druckstempels 6 sitzt und von der Innenfläche der Ringwand 7c in jeder Teleskopierstellung überdeckt ist. Das sich vertikal erstreckende maximale Teleskopiermaß b ist beim vorliegenden Ausführungsbeispiel durch den Abstand der Ringwand 7c vom Deckel 3 bestimmt. Bei einer andeutungsweise dargestellten Ausbildung des Druckstempels 6 mit einem Flansch 6b ist das maximale Teleskopiermaß b durch den Abstand zum Flansch 6a bestimmt. Durch den Flansch 6b lässt sich die gegen den Deckel 3 wirksame Druckfläche des Druckstempels 6 vergrößern und die im Funktionsbetrieb wirksame Flächenpressung verringern.

Das Druckmittel 8 bzw. die Federscheiben können durch die Innenmantelfläche der Ringwand 7c zentriert sein. Um jedoch den dazwischen beim Teleskopieren stattfindenden Reibverschleiß zu vermeiden, ist das vorzugsweise ringförmige Druckmittel 8, innen durch einen Zentrierbolzen 6c mit geringem Bewegungsspiel zentriert, der sich beim Ausführungsbeispiel einteilig vom Druckstempel 6 nach oben erstreckt und dabei in eine zwischen der Stützfläche 7a und dem Drehangriffselement 11 vorhandenes Führungsloch 7d eintauchen oder kurz davor enden kann, wodurch eine zusätzliche, jedoch nicht unbedingt erforderliche Führung für den Druckstempel 6 geschaffen wird.

Vorzugsweise koaxial ist im Druckstempel 6 ein Durchgangsloch 14 angeordnet, das z. B. durch eine Ringwand 15 ausgekleidet sein kann, die an ihrem unteren Ende einen Flansch aufweisen kann, mit dem sie in der Druckfläche in einer Ausnehmung versenkt angeordnet ist. Die Ringwand 15 kann zu ihrer axialen Befestigung im Druckstempel 6 mit einer Presspassung darin eingepresst sein.

Das Loch 14 kann dazu dienen, Funktionselemente, wie z. B. Sensorelemente, aufzunehmen, die das Schraubteil 7 durchsetzten und darüber mit zugehörigen Steueroder Regelvorrichtungen in Funktionsverbindung stehen. Es kann z. B. ein Temperatursensor vorgesehen sein, der in das Loch 14 hineingesteckt ist. Es kann auch ein Druckmesselement in das Loch 14 eingesteckt sein, dessen vertikale Position bzw. Positionsveränderung beim Abheben des Deckels 3 als Indikator für die Höhe des im Funktionsbetrieb im Aufschlussraum 1d herrschenden Innendruckes dient.

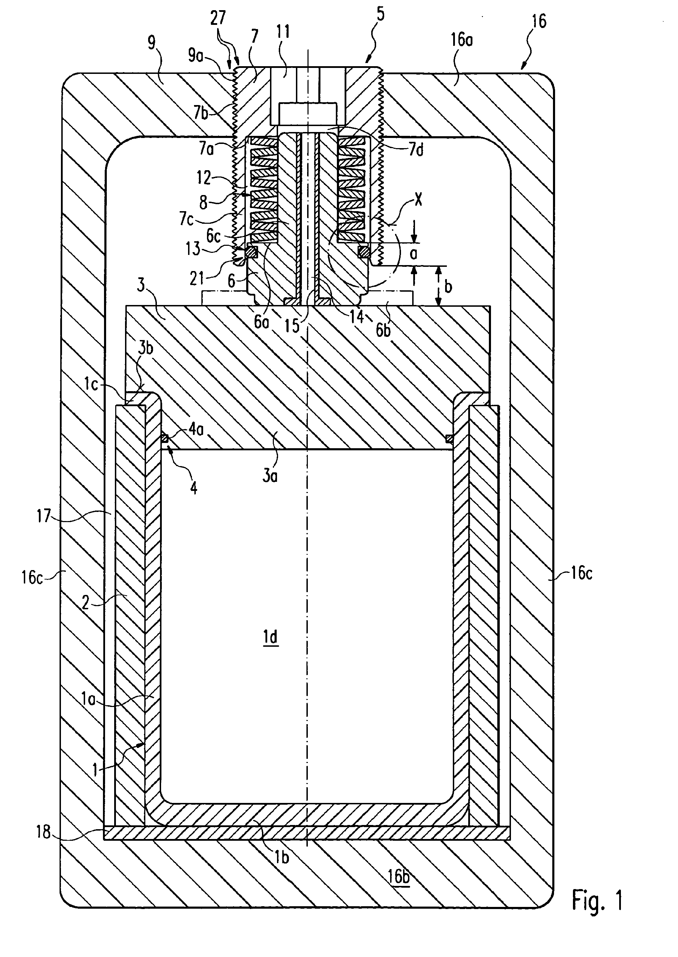

Das Widerlager 9 ist beim Ausführungsbeispiel gemäß Fig. 1 durch die Deckenwand 16a eines Stützgehäuses 16 gebildet, das mit einer Bodenwand 16b und zwei Seitenwänden 16c kastenförmig ausgebildet sein kann und einen vorderseitig offenen oder horizontal durchgehenden Stellraum 17 für den Aufschlussbehälter 1 bildet, in den dieser von der betreffenden Seite her einstellbar und wieder entnehmbar ist. Im eingestellten Zustand liegt der Aufschlussbehälter 1 mit seiner beim Ausführungsbeispiel ebenen Bodenwand 1b auf der Bodenwand 16b des Stützgehäuses 16 auf, wodurch die erstere Bodenwand 1b gegen den Innendruck abgestützt ist. Zwischen den Bodenwänden 1b und 16b kann eine Zwischenscheibe 18 angeordnet sein, die vorzugsweise aus wärmeisolierendem Material besteht, z. B. Kunststoff, um die Wärmeabfuhr vom Aufschlussbehälter 1 zu reduzieren.

Die sich vom Schraubteil 7 nach unter erstreckende Ringwand 7c ermöglicht aufgrund der sich ergebenden verhältnismäßig großen Länge dann einen großen vertikalen Verstellbereich für das Schraubteil 7 und somit dessen Anpassung an unterschiedlich hohe Aufschlussbehälter 1, wenn das Außengewinde 7b sich wenigstens bis in den unteren Endbereich der Ringwand 7c oder z. B. über deren gesamte vertikale Länge erstreckt.

Um zu verhindern, dass dann, wenn sich kein Aufschlussbehälter 1 unter der Vorrichtung 5 befindet, der Druckstempel 6 aus seiner Übergreifstellung mit dem Schraubteil 7 herabfällt, ist eine Begrenzungsvorrichtung 21 zwischen dem Druckstempel 6 und dem Schraubteil 7 beziehungsweise der Ringwand 7c vorgesehen, die die maximale Ausschubbewegung des Druckstempels 6 begrenzt und beim Ausführungsbeispiel durch eine Anschlagvorrichtung mit einem Anschlagelement 22a im unteren Endbereich der Ringwand 7c gebildet ist. Das Gegenanschlagelement 22b ist vorzugsweise durch den Dichtring 13a gebildet, der die Mantelfläche des Druckstempels 6 radial etwas überragt und somit das Gegenanschlagelement 22b bilden kann, ohne dass es eines besonderen Gegenanschlagelementes bedarf. Hierdurch erfüllt der Dichtring 13a eine Dichtungs- und eine Anschlagfunktion. Das Anschlagelement 21 ist durch eine innere Ringwulst auf der Innen-Mantelfläche der Ringwand 7c gebildet. Der Durchmesser der Ringwulst ist unter Berücksichtigung eines geringen Bewegungs- oder Gleitspiels größer bemessen, als der Durchmesser des Druckstempels 6, wodurch dessen Verschiebung in der Ringwulst gewährleistet ist. Der Innendurchmesser d1 des Ringwulstes ist etwas kleiner bemessen, als der übrige Innendurchmesser d2 der Ringwand 7c, wodurch sich die Innenwulst ausbilden lässt. Dabei ist der Innendurchmesser d2 nur so groß bemessen, dass der Dichtring 13a elastisch dichtend an der Innen-Mantelfläche 7e der Ringwand 7c anliegt. Beim Ausführungsbeispiel ist die äußere Flanke des Anschlagelementes 22 bzw. Ringwulstes durch eine schräge oder gerundete Einführungsfläche 23 gebildet. Die innere Flanke 24 ist eine sich vorzugsweise etwa rechtwinklig zur Mittelachse des Druckstempels 6 erstreckende Stufenfläche. Beim Ausführungsbeispiel ist die innere Ringwulst im Querschnitt spitz ausgebildet, so dass sich eine spitze Ringkante ergibt. Hierdurch wird der Dichtring 13a beim zwangsweisen Herausziehen des Druckstempels 6 aus seiner Muffenverbindung abgeschert und es wird unter Berücksichtigung der Beschädigung des Dichtrings 13a ein Demontageschutz geschaffen.

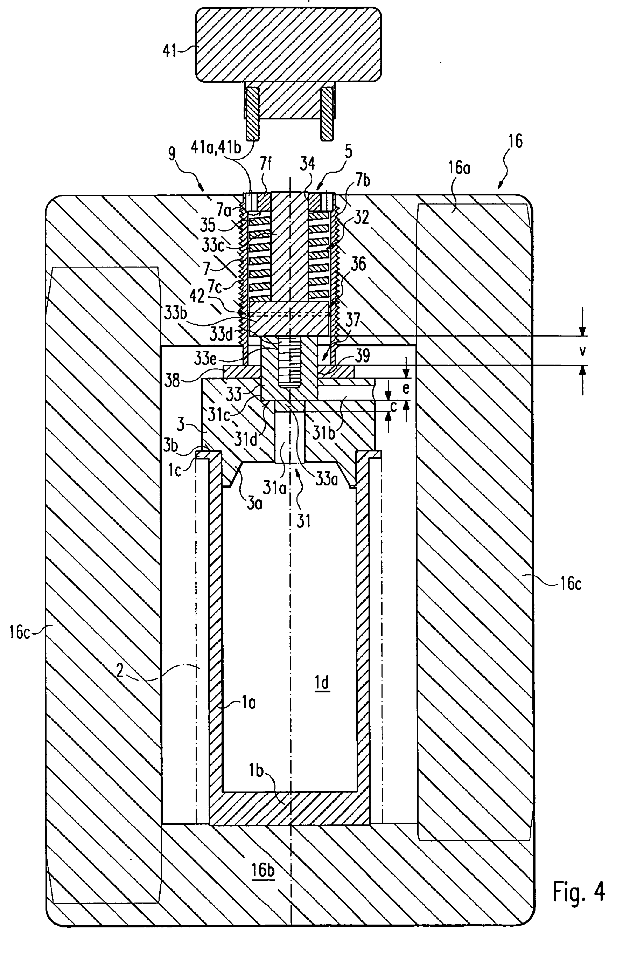

Beim Ausführungsbeispiel nach Fig. 3, bei dem gleiche oder vergleichbare Teile mit gleichen Bezugszeichen versehen sind, ist das Schraubteil 7 mit seiner Ringwand 7c so groß ausgebildet, dass es den Aufschlussbehälter 1 zumindest in seinem oberen Randbereich kappenförmig übergreift und mit diesem verschraubt ist, so dass die Umfangswand 1a oder der Flansch 1c oder ein gegebenenfalls vorhandener Stützmantel 2, mit denen die Ringwand 7c jeweils verschraubbar ist, das Widerlager 9 bildet. Beim Ausführungsbeispiel ist ein Stützring 25 auf den Aufschlussbehälter 1 aufgesetzt, vorzugsweise im oberen Bereich des Aufschlussbehälters 1, insbesondere in Anlage am Flansch 1c anliegend angeordnet und mit der Außen-Mantelfläche des Aufschlussbehälters 1 verbunden, z. B. durch Aufpressen oder Kleben. Eine solche Verbindung gewährleistet das Einleiten der Widerlagerkräfte in den Aufschlussbehälter 1. Wenn der Stützring 25 am Flansch 1c anliegt, kann auf eine Verbindung mit der Außen-Mantelfläche verzichtet werden, da der Flansch 1c die Widerlagerkräfte aufnimmt. Aber auch in diesem Falle ist es vorteilhaft, den Stützring 25 unverlierbar am Aufschlussbehälter 1 zu halten, z. B. durch Kleben oder Aufpressen.

Die Schraubverbindung zwischen dem Schraubteil 7 und dem Stützring 25 weist vorzugsweise ein Innengewinde 7f im Endbereich der Ringwand 7c und ein passendes Außengewinde am Stützring 25 auf.

Bei beiden vorbeschriebenen Ausführungsbeispielen kann der Druckstempel 6 den Deckel 3 bilden, wie es Fig. 3 zeigt. Bei der Ausgestaltung nach Fig. 1 wären die Querschnitte des Druckstempels 6 und des Schraubteils 7 entsprechend zu vergrößern, damit der Druckstempel 6 den Deckel 3 bilden kann. Außerdem müsste das Loch 14 in einem Abstand von dem Aufschlussbehälter 1 zugewandten Ende des Druckstempels 6 enden.

Bei allen Ausführungsbeispielen ist es auch möglich, den Druckstempel im Querschnitt gemäß Fig. 3 U-förmig auszubilden und somit mit einer Umfangswand 6d zu versehen, die aufgrund ihrer axialen Länge eine kippsichere Führung des Druckstempels 6 gewährleistet und außerdem eine hinreichende Abdichtung gewährleisten kann. Es ist außerdem vorteilhaft, in die Mantelfläche der Umfangswand 6d eine oder mehrere einen axialen Abstand von einander aufweisende Nuten 6e anzuordnen, die sowohl die Abdichtung verbessern als auch unter Berücksichtigung unterschiedlicher Wärmeausdehnungen, insbesondere dann schädliche Spannungen in der Passung zu vermeiden, wenn das Material des Druckstempels insbesondere bei höheren Aufschlusstemperaturen verhältnismäßig weich bzw. nachgiebig ist.

Beim Ausführungsbeispiel nach Fig. 3 ist das elastische Druckmittel 8 durch eine Wendelfeder gebildet, die sich an der Deckenwand des Schraubteils 7 abstützt und am Druckstempel 6 angreift, hier im Ausnehmungsgrund.

Auch beim Ausführungsbeispiel gemäß Fig. 3 kann ein Zentrierbolzen 6c vorgesehen sein, der im Querschnitt vorzugsweise ebenfalls kreisrund ausgebildet ist und im Führungsloch 7d in der Deckenwand des kappenförmigen Schraubteils 7 mit Bewegungsspiel längs bzw. vertikal geführt sein kann. Der Zentrierbolzen 6c weist an seinem unteren Ende vorzugsweise einen Flansch zur Verringerung der Flächenpressung auf, auf dem das Druckmittel 8 aufliegen kann.

Bei allen Ausführungsbeispielen ist es vorteilhaft, zwischen dem Schraubteil 7 und einem am Aufschlussbehälter 1 oder am Deckel 3 oder am Druckstempel 6 positionierten Teil eine Markierung anzubringen, die die axiale Stellung des Schraubteils 7 bezüglich dem positionierten Teil erkennen lässt und vorzugsweise eine definierte Voreinstellung des Schraubteils 7 ermöglicht. Die Markierung kann z. B. durch eine Skala und einen Index gebildet sein, die sich jeweils an einem der beiden vergleichenden Teile befinden. Beim Ausführungsbeispiel nach Fig. 1 kann die Markierung 27 z. B. auf den Oberseiten des Schraubteils 7 und des Widerlagers 9 angeordnet sein, vorzugsweise in der Nähe oder an der Gewindefuge des Schraublocks, z. B. als Ring-Skala auf der Deckenwand 16a und als Index auf dem Schraubteil 7.

Beim Ausführungsbeispiel nach Fig. 3 kann die Markierung 27 z. B. durch das Stirnende des Zentrierbolzens 6c und dem unteren oder oberen Rand des Führungslochs 7d gebildet sein. Es ist auch möglich, die Markierungen oder Skalenstriche an der Innenwandfläche des Führungslochs in axialen Abständen voneinander anzubringen, die mit dem freien Ende des Zentrierbolzens 6c ein Erkennen bzw. Ablesen der Position des Zentrierbolzens 6c und somit auch der Öffnungs- oder Schließstellung des Druckstempels 6 und gegebenenfalls auch Deckels ermöglichen.

Der Aufschlussbehälter 1 besteht beim Ausführungsbeispiel nach Fig. 1 aus einem korrosionsresitenten Material, insbesondere Kunststoff und vorzugsweise Polytetrafluorethylen (PTFE). Die übrigen Teile des Aufschlussbehälters 1 einschließlich des Stützgehäuses 16 bestehen vorzugsweise aus mikrowellendurchlässigem Material, vorzugsweise Kunststoff. Dies kann auch für die Vorrichtung 5 gelten. Beim Ausführungsbeispiel besteht die das elastische Druckmittel 8 bildende Feder oder die Federelemente aus Metall, insbesondere aus Federstahl bzw. Edelstahl. Auch das Schraubteil 7 kann aus Metall, z. B. Edelstahl, bestehen, wobei es als Faraday'scher Käfig bezüglich der Feder wirkt. Die Funktion wird verbessert, wenn der Käfig eine polierte Oberfläche hat und seine Kanten abgerundet sind. Außerdem ist es vorteilhaft, die Abmessungen des Käfigs, d. h. seinen Durchmesser und seine axiale Länge, vorzugsweise zwischen einem Viertel und einer ganzen Wellenlänge der verwendeten Mikrowellenstrahlung zu bemessen. Zusätzlich kann die Oberfläche des Metallkäfigs mit einem Material, wie z. B. PTFE, beschichtet sein, das gegen aggressive Chemikalien resistent ist, um zu verhindern, dass die Metalloberfläche durch die Chemikalien angegriffen wird.

Für einen Aufschlussvorgang wird ein Probematerial in den Aufschlussbehälter 1 eingegeben und der Aufschlussbehälter 1 mit der Vorrichtung 5 verschlossen. Dabei wird das Schraubteil 7 so weit eingeschraubt (Fig. 1) oder aufgeschraubt (Fig. 3), dass das elastische Druckmittel 8 eine Schließkraft aufbringt, die einem bestimmten Innendruck entspricht. Wenn im Funktionsbetrieb der Innendruck über einen bestimmten Wert bzw. den eingestellten Wert ansteigt, öffnet der Deckel 3 bzw. der Druckstempel 6 selbsttätig, wobei das Druckmittel 8 nachgibt und der Innendruck entweichen kann. Hierbei funktioniert die Vorrichtung 5 wie ein Überdruckventil, wobei der Öffnungsdruck durch Einschrauben des Schraubteils 7 einstellbar ist.

Das Ausführungsbeispiel nach Fig. 3, bei dem gleiche oder vergleichbare Teile mit gleichen Bezugszeichen versehen sind, unterscheidet sich vom vorher beschriebenen Ausführungsbeispiel hinsichtlich mehrerer Ausgestaltungen.

Zum einen ist das Widerlager 9 nicht Teil eines den Aufschlussbehälter 1 insgesamt aufnehmenden Stützgehäuses 16 sondern eines kleinen kappenförmigen Stützgehäuses 22, das zwar ebenfalls die Stützkräfte in den Aufschlussbehälter 1 leitet, jedoch nur den oberen Bereich des Aufschlussbehälters 1 übergreift, sich mittelbar oder unmittelbar an diesem oberen Bereich abstützt und somit die Stützkräfte in diesen Bereich des Aufschlussbehälters 1 leitet. Die Verbindung mittelbar oder unmittelbar mit dem oberen Bereich des Aufschlussbehälters 1 erfolgt durch eine Schraubverbindung. In der Ringwand 7c ist oberhalb des Flansches 1c oder des Stützringes 25 eine radiale Abblasöffnung 7g vorgesehen. Die Bodenwand 1b des vorzugsweise zylindrischen Aufnahmebehälters 1 ist vorzugsweise halbkugelförmig ausgebildet, wodurch eine gleichmäßige Beanspruchung der Wandung erfolgt.

Beim Ausführungsbeispiel nach Fig. 4, bei dem gleiche oder vergleichbare Teile mit gleichem Bezugszeichen versehen sind, kann der Aufschlussbehälter 1 (abgesehen vom Deckel 3) und das Stützgehäuse 16 im Wesentlichen gleich bzw. prinzipiell gleich ausgebildet sein. Die wesentlichen Unterschiede sind folgende.

Zum einen ist das ein Verschlussteil bildende Schraubteil 7 so lang ausgebildet, dass es bis zum Deckel 3 reicht und somit gegen den Deckel 3 spannbar ist, wodurch der Aufschlussbehälter 1 dicht verschließbar ist und dabei der Deckel 3 starr verschlossen ist.

Zum anderen ist im Deckel 3 ein Auslasskanal 31 angeordnet, der durch ein Ventil 32 verschlossen ist, wobei das Ventil 32 dann, wenn der Innendruck im Aufschlussbehälter 1 einen vorbestimmten Wert übersteigt, selbsttätig öffnet. Der Auslasskanal 31 kann winkelförmig verlaufen, wobei der erste vom Innenraum 1d ausgehende Auslasskanalabschnitt 31a sich vorzugsweise koaxial im Deckel 3 erstreckt und im oberen Bereich des Deckels 3 in einen sich seitlich erstreckenden Auslasskanalabschnitt 31b übergeht. Zum Verschließen des Auslasskanals 31 dient ein Ventilkörper 33 in einer den Druckstempel 6 des vorherigen Ausführungsbeispiels vergleichbaren Anordnung. Der z. B. zylinderförmige Ventilkörper 33 verschließt unterseitig den Auslasskanal 31, wobei er beim Ausführungsbeispiel in eine im Deckel 3 oberseitige Kanalvergrößerung 31c mit einer z. B. rechtwinkligen Stufenfläche 31d einfasst, die einen Anschlag für eine nach unten gerichtete Bewegung des Ventilkörpers 33 bildet. Der seitliche Auslasskanalabschnitt 31b zweigt oberhalb der Stufenfläche 31d von der Kanalerweiterung 31c ab. Vom Ventilkörper 33 kann unterseitig ein mit Bewegungsspiel an den Auslasskanalabschnitt 31a angepasster Zapfen 33a abstehen, der den Auslasskanalabschnitt 31a mit geringem Bewegungsspiel schließt. Die Länge c des Zapfens 33a ist kleiner als die Länge e der Kanalvergrößerung 31c.

Der Ventilkörper 33 erstreckt sich von einer im Querschnitt vergrößerten Ventilkörperbasis 33b nach unten, die mit Bewegungsspiel an die Innenquerschnittsform und -größe des in diesem Bereich hohlzylindrischen Schraubteils 7 angepasst ist und somit darin vertikal verschiebbar geführt ist. Von der Ventilkörperbasis 33b kann sich konzentrisch ein Bolzen 33c nach oben erstrecken, der z. B. einteilig an die Ventilkörperbasis 33b angeformt sein kann und eine obere Stirnwand 7f des Schraubteils 7 in einem Loch 34 durchsetzt und oberseitig abschließen oder vorstehen kann. Zwischen der Stirnwand 7f und der Ventilkörperbasis 33b sitzt eine den Bolzen 33c umgebende Feder 35, z. B. eine Wendelfeder, die sich an der Stirnwand 7f abstützt und das in seiner Gesamtheit mit 36 bezeichnete Verschlussteil nach unten vorspannt. Das obere Ende des Bolzens 33c kann mit der oberen Stirnseite des Schraubteils 7 einen Indikator für den sich jeweils im Bewegungsbereich der Länge c einstellenden Druck oder für den Öffnungsdruck bilden.

Das Verschlussteil 36 ist mit dem Ventilkörper 33 vorzugsweise zweiteilig ausgebildet und durch eine Schraubverbindung mit letzterem lösbar verbunden. Beim Ausführungsbeispiel ragt von der Ventilkörperbasis 33b ein Gewindezapfen 33d nach unten, auf den der Ventilkörper 33 mit einer Gewindebohrung 33e aufgeschraubt und somit lösbar und austauschbar gehalten ist. Zwecks Anpassung an unterschiedliche Deckel 3 können mehrere unterschiedliche und an den jeweils zugehörigen Deckel 3 angepasste Ventilkörper 33 vorgesehen sein, die durch Austausch mit der Ventilkörperbasis 33b verbunden werden können.

Am unteren Ende des Schraubteils 7 kann ein Anschlag 37 zur Begrenzung der Bewegung des Verschlussteils 36 nach unten angeordnet sein. Beim Ausführungsbeispiel ist am unteren des Schraubteils 7 eine Flanschscheibe 38 vorzugsweise lösbar befestigt, die ein koaxiales Loch 39 aufweist, in dem der Ventilkörper 33 die Flanschscheibe 38 durchsetzt, z. B. auch darin geführt sein kann, und die Flanschscheibe 38 nach unten überragt.

Für einen Aufschlussvorgang wird der gefüllte Aufschlussbehälter 1 unter den Ventilkörper 33 gestellt, und das Schraubteil 7 manuell mit einem Drehwerkzeug 41, das mit einer unrunden Zapfenverbindung oder mit zwei Zapfenverbindungen 42 formschlüssig mit dem oberen Ende des Schraubteils 7 verbindbar ist, gegen den Deckel 3 geschraubt, wodurch der Aufschlussbehälter 1 mit einer axialen Spannung starr verschlossen wird. Dabei liegt das Schraubteil 7 mit der Flanschscheibe 38 auf dem Deckel 3 auf, wodurch die Flächenpressung aufgrund der verhältnismäßig großen Fläche der Flanschscheibe 38 gering ist. Bei der gegen den Deckel 3 gerichteten Bewegung des Schraubteils 7 trifft der Ventilkörper 33 auf den Ventilsitz 33a und die Ventilkörperbasis 33b bzw. das Verschlussteil 36 wird um den Vorspannweg V gegen die Feder 35 vorgespannt, wobei die Feder 35 mit einer bestimmten Vorspannung, z. B. 200 N/mm, gegen den Ventilsitz drückt. Beim Ausführungsbeispiel weist der erste Auslasskanalabschnitt 33a einen Durchmesser von etwa 8 mm auf.

Beim Ausführungsbeispiel besteht der Ventilkörper 33 aus einem korrosionsfestem Material, z. B. Keramik oder Kunststoff, vorzugsweise PTFE. Die Ventilkörperbasis 33b kann z. B. aus korrosionsfestem Stahl oder aus Keramik bestehen. Das Schraubteil 7 und die Flanschscheibe 38 bestehen vorzugsweise aus korrosionsfestem Metall, insbesondere Edelstahl. Dies gilt auch für die Feder 35, die z. B. aus Federstahl bestehen kann.

Um den Innenraum des Schraubteils 7 vor Verunreinigungen zu schützen, ist zwischen der Ventilkörperbasis 33b und der Wandung des Schraubteils 7 eine Ringdichtung 42 angeordnet, vorzugsweise mit einem Dichtring 42a, der in einer Ringnut des einen Bauteils, insbesondere in der Ventilkörperbasis 33b, sitzt und dicht mit der gegenüberliegenden Wandung des anderen Bauteils zusammenwirkt. Eine solche Ringdichtung 42 kann auch zwischen der Flanschscheibe 38 und dem Ventilkörper 33 vorgesehen sein.

Für einen Aufschlussbetrieb wird die Behälteranordnung in einen Mikrowellenofen gestellt und mit Mikrowellen beaufschlagt. Wenn aufgrund einer inneren Erhitzung und gegebenenfalls auch einer Reaktion des im Aufschlussbehälter befindlichen Stoffes der Innendruck im Aufschlussbehälter 1 einen vorbestimmten Wert übersteigt, hebt der Ventilkörper 33 selbsttätig vom Ventilsitz ab, wodurch der Auslasskanal 31 geöffnet wird und der Innendruck durch Abblasen durch den Auslasskanal 31 begrenzt wird.

Bei allen Ausführungsbeispielen ist es vorteilhaft, die Vorrichtung 5 oder das Ventil 32 so einstellbar auszubilden, dass der Deckel 3 oder das Ventil 32 bei unterschiedlichen Drücken im Aufschlussbehälter 1 öffnet. Hierdurch lässt sich der Öffnungsdruck und somit der beim Behandeln bzw. Aufschließen des Materials wirksame Druck ändern und an ein vorgegebenes Erfordernis anpassen. Dies kann z. B. dadurch erreicht werden, dass mehrere elastische Druckmittel 8 oder mehrere Federn 35 unterschiedlicher Druckkraft zugeordnet werden, die wahlweise durch Austausch einsetzbar sind. Hierdurch lässt sich die Vorrichtung 5 oder das Ventil 32 an unterschiedlich hohe Öffnungsdrücke anpassen.

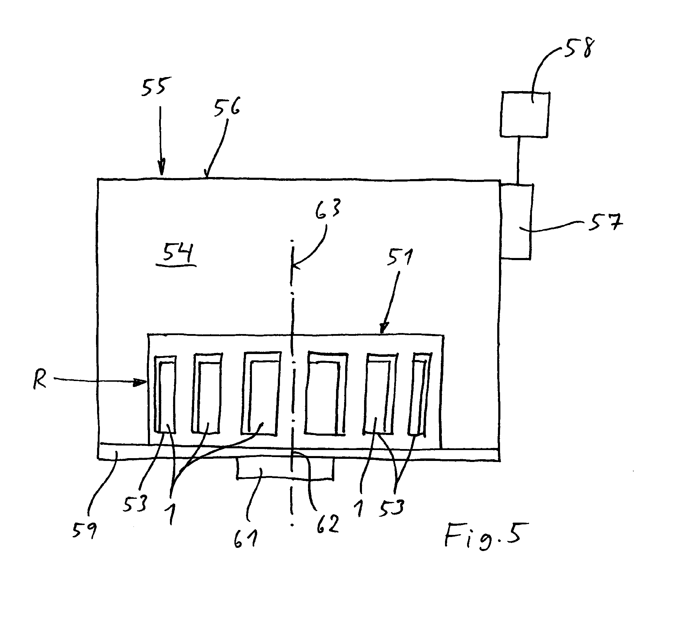

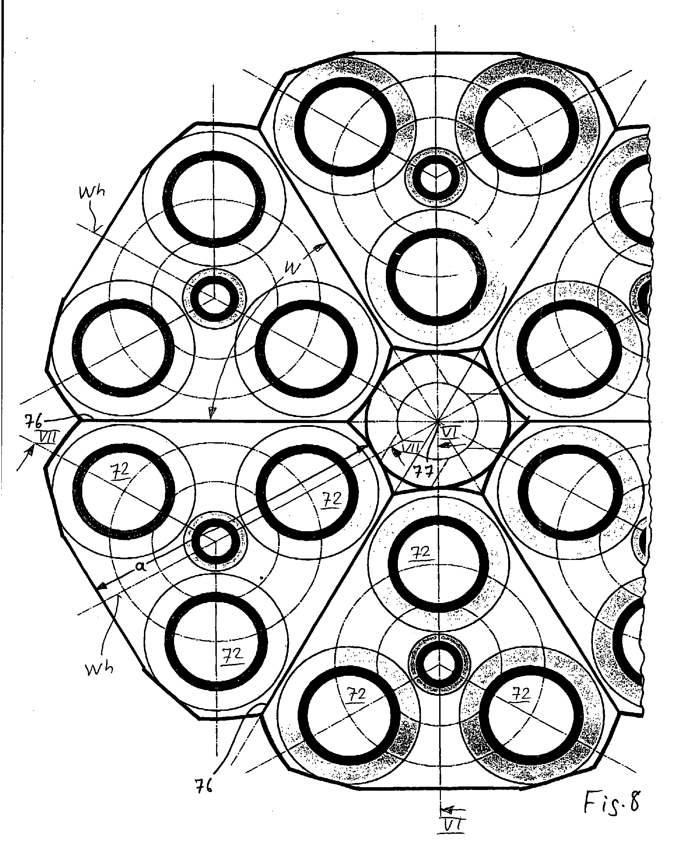

Das Ausführungsbeispiel nach Fig. 5 bis 8, bei dem gleiche oder vergleichbare Teile mit gleichen Bezugszeichen versehen sind, zeigt eine Vorrichtung 51 zur Aufnahme einer Mehrzahl Aufschlussbehälter 52 an jeweils einem Behälter-Stellplatz 53 im Bestrahlungsraum 54 eines Mikrowellengerätes 55 mit einem durch eine Tür oder dergleichen wahlweise zu öffnenden und zu schließenden Gehäuse 56, das den Bestrahlungsraum 54 umgibt. Dem Mikrowellengerät 55 wird ein Mikrowellengenerator 57 und eine elektronische Steuereinrichtung 58 zur Steuerung bzw. Regelung des Mikrowellengerätes 55 zugeordnet.

Ein soweit beschriebenes Mikrowellengerät 55 ist an sich bekannt und braucht deshalb nicht weiter beschrieben zu werden.

Beim vorliegenden Ausführungsbeispiel kann die Vorrichtung 51 ein Rotor sein, der in seiner z.B. auf den Boden 59 des Gehäuses 56 stehenden Position durch einen z.B. unterhalb des Bestrahlungsraum 54 angeordneten Antrieb 61 mit einer den Boden 69 durchfassenden Antriebswelle 62 in Drehung um seine vertikale Mittelachse 63 antreibbar ist. Als Drehverbindung mit dem Rotor kann eine Steckverbindung dienen, die an der Unterseite der Vorrichtung 51 eine unrunde Steckausnehmung 65 aufweist, in die die Antriebswelle 62 formschlüssig einfasst.

Die Hauptteile des in seiner Gesamtheit mit R bezeichneten Rotors sind ein Rotorträger 66 , der aus einer Bodenplatte 67 und einer sich von dieser vertikal nach oben erstreckenden Zentralsäule 68 besteht, und eine Mehrzahl Trägersegmente 71 für jeweils mehrere Aufschlussbehälter 1 auf jeweils einem zugehörigen Standplatz 72 aufweist. Die Trägersegmente 71 weisen außerdem Verschlussvorrichtungen 73 zum Verschließen der Deckel 3 auf, die vertikal verstellbar und vorzugsweise durch eine Einstellvorrichtung 74 einstellbar ist, wobei eine Überdruck-Abblasvorrichtung 75 vorgesehen und insbesondere der Verschlussvorrichtung 73 zugeordnet ist, die dann, wenn der Innendruck im Aufschlussbehälter 1 einen bestimmten Wert überschreitet, selbsttätig öffnet und abbläst.

Die Trägersegmente 71 weisen in der Draufsicht gesehen die Form eines Dreiecks z.B. mit gebrochenem oder gewundeten Ecken auf, wobei ihre einander zugewandten Seitenflächen 76 in etwa an Vertikalebenen angrenzen, die sich längs durch die Mittelachse 77 der Vorrichtung 51 erstrecken. Die radiale Abmessung a entspricht in etwa dem radialen Abstand der Zentralsäule 68 von z.B. kreisrunden Umfang der Bodenplatte 67. Die in die Umfangsrichtung der Vorrichtung 1 gerichtete Breite der Trägersegmente 71 ist so groß bemessen, dass die im Wesentlichen aneinander liegenden Trägersegmente 71 einen sich um die Zentralsäule 68 erstreckenden Ring bilden, wobei die radial inneren Enden an der Zentralsäule 76 anliegen. Hierdurch ist eine einfache Handhabung beim Bestücken der Vorrichtung 1 mit den Trägersegmenten 71 möglich, weil diese gegen die Zentralsäule 68 und nebeneinander eingesetzt werden können, wobei sich der Ring Stück für Stück selbsttätig schließt.

Beim Ausführungsbeispiel bestehen die einander gleichen Trägersegmente 71 aus einer plattenförmigen Basis 78, einer mit letzterer fest verbundenen und auf der Basis 78 zentral angeordneten Tragsäule 79, und einem z.B. plattenförmigen Oberteil 81, das vertikal verstellbar in der Tragsäule 79 gehalten und von letzterer geführt ist. Dem Oberteil 81 sind auch die Verschlussvorrichtung 73 und die Einstellvorrichtung 74 zugeordnet.

Auf der Basis 78 sind beim Ausführungsbeispiel drei Standplätze 72 für drei Aufschlussbehälter 1 angeordnet, die gleichmäßig verteilt angeordnet sein können. Über jedem Standplatz 72 bzw. jedem darauf stehenden Aufschlussbehälter 1 kann jeweils eine Verschlussvorrichtung 73 und Einstellvorrichtung 74 zugeordnet sein, die am Oberteil 81 angeordnet sein können. Beim vorliegenden Ausführungsbeispiel ist für alle Aufschlussbehälter 1 des jeweiligen Trägersegments 71 eine gemeinsame Verschlussvorrichtung 73 und Einstellvorrichtung 74 vorhanden, wobei jedem Aufschlussbehälter 1 ein eigenes elastisches Druckmittel und eine eigene Abblasvorrichtung 75 zugeordnet sind. Beim Ausführungsbeispiel sind die Abblasvorrichtungen 75 in die gemeinsame Verschlussvorrichtung 73 integriert, so dass sie Teile der Verschlussvorrichtung 73 sind. Wir bereits beim Ausführungsbeispiel nach Fig. 3 ist auch bei diesem Ausführungsbeispiel der Ventilkörper 33 Teil der Abblasvorrichtung 75 und der Verschlussvorrichtung 73. Wesentliches Element der Abblasvorrichtung 75 und der Verschlussvorrichtung 73 ist das elastische Druckmittel 8, das zum einen mittelbar über den Ventilkörper 33 zum einen den Deckel 3 mit der Verschlusskraft gegen den Aufschlussbehälter 1 drückt und zum anderen bei einer Überschreitung des Innendrucks nachgibt und komprimiert wird, so dass der Ventilkörper 33 den Auslasskanal 31b frei gibt und der Überdruck abblasen kann.

Beim Ausführungsbeispiel nach Fig. 5 bis 8 ersetzt das Oberteil 81 die jedem Aufschlussbehälter 1 zugeordneten Schraubteile 7 als gemeinsames Schraubteil, das mittels einer Gewindemutter 82, die auf ein Gewinde 83 im oberen Endbereich der Tragsäule 79 aufgeschraubt ist, durch Ab- und Aufschrauben vertikal verstellbar ist. Hierbei bildet die Tragsäule 79 eine durch ein Führungsloch 84 gebildete Führung 85 für das Oberteil 81. Durch eine zwischen der Tragsäule 79 und dem Oberteil 81 wirksame Drehsicherung 86, die die vertikale Verstellung des Oberteils 81 gewährleistet, ist das Oberteil 81 auch bzgl. den Aufschlussbehältern 1 in der Umfangsrichtung positioniert. Die Drehsicherung 86 kann durch einen aus der Tragsäule 97 radial rauragenden Sicherungsstift 87 gebildet sein, der in eine vertikale Führungsnut 88 in der Wandung des Führungslochs 84 einfasst. Das Oberteil 81 ist durch eine axiale Drehverbindung 89 mit der Gewindemutter 82 verbunden und somit bei Gewährleistung der Drehbarkeit der Gewindemutter axial an dieser gehalten. Beim Ausführungsbeispiel wird dies durch einen Haltering 91 erreicht, der auf der Oberseite des Oberteils 81 befestigt ist und mit einer inneren Ringschulter 92 eine nach oben gerichtete Schulterfläche 93 der Gewindemutter 82 übergreift. Zwischen der Gewindemutter 82 und dem Oberteil 81 ist ein Axiallager 94 angeordnet, der vorzugsweise durch ein Wälzlager gebildet ist, z.B. ein Nadellager mit zwei Lagerscheiben 95 und dazwischen angeordneten Wälzkörpern. Ein durch ein Wälzlager gebildetes Lager 94 erleichtert das Schrauben der Gewindemutter 82 beim Verschließen aufgrund der geringen Reibung zwischen der Gewindemutter 82 und dem Oberteil 81. Unter dem Axiallager 94 ist eine Platte 81a aus festem Material eingebaut, die z.B. aus Metall oder Stahl bestehen kann. Die Platte 81a ist z.B. durch Formgebung so ausgebildet, dass von den Mikrowellen nicht wesentlich erwärmt wird.

Auch beim Ausführungsbeispiel nach Fig. 5 bis 8 bleist das elastische Druckmittel 8 eine Druckfeder 35, z.B. eine Wendelfeder, auf, die von einem hülsen- oder topfförmigen Federgehäuse 96 umgeben ist. Innen wird die Feder 35 von einer Verbindungshülse 97 mit Bewegungsspiel durchsetzt, die an ihrem oberen Ende mit einem Stift 98 verbunden ist, der ein optischen Indikator für den im Aufschlussbehälter 1 enthaltenen Innendruck sein kann. Das Federgehäuse 96 sitzt in einem weiteren Gehäuse 99, das in einem nach unten offenen Ausnehmung 101 im Oberteil 81 eingesetzt und z.B. Klemmsitz darin gehalten und mittels einer Ringdichtung abgedichtet ist. Am unteren Ende des weiteren Gehäuses 99 ist ein Flansch 102 angeordnet und gehalten, der einen oberen Abschnitt 33b des Ventilkörpers 33 mit einer vertikalen Führung mit Bewegungsspiel umgibt, das durch eine Ringdichtung 104, z.B. ein O-Ring, abgedichtet ist, der in einer Ringnut der Ventilkörperbasis 39b oder des Flansches 102 sitzt. Die Feder 35 stützt sich nach oben mittelbar über einen Flansch des Federgehäuses 96 am Oberteil 81 ab, und sie wirkt nach unten gegen einen Flansch 97a der Verbindungshülse 97. Ein kleiner Unterschied der Ausgestaltung des Ventils 32 zu der Ausgestaltung nach Fig. 3 besteht darin, dass der Ventilkörper 33 mit einer konischen Stufenfläche 31d an einem entsprechend konischen Ventilsitz des Deckels 3 anliegt.

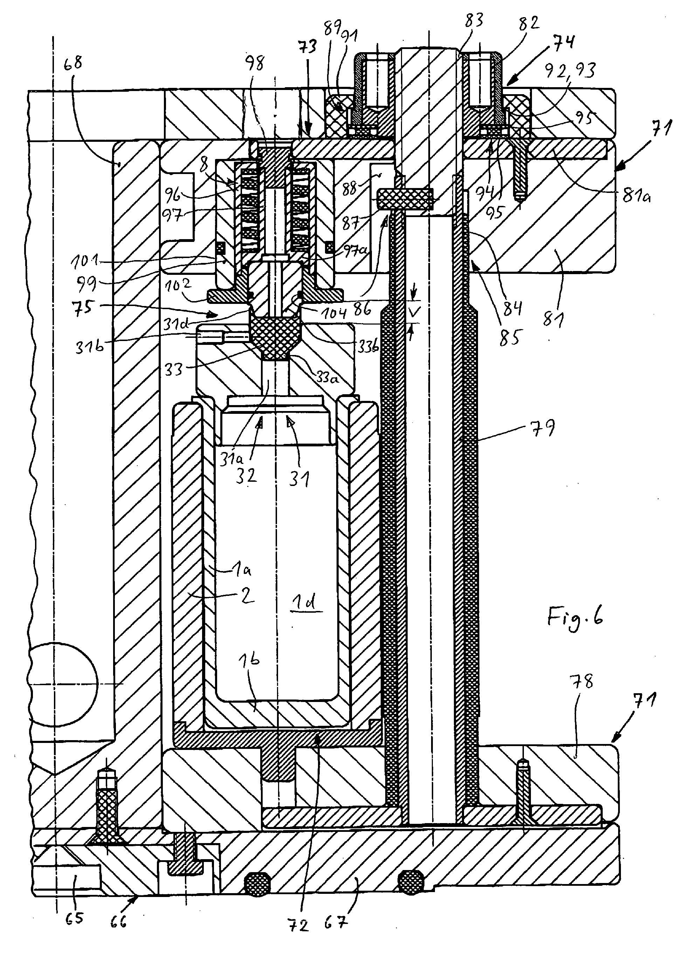

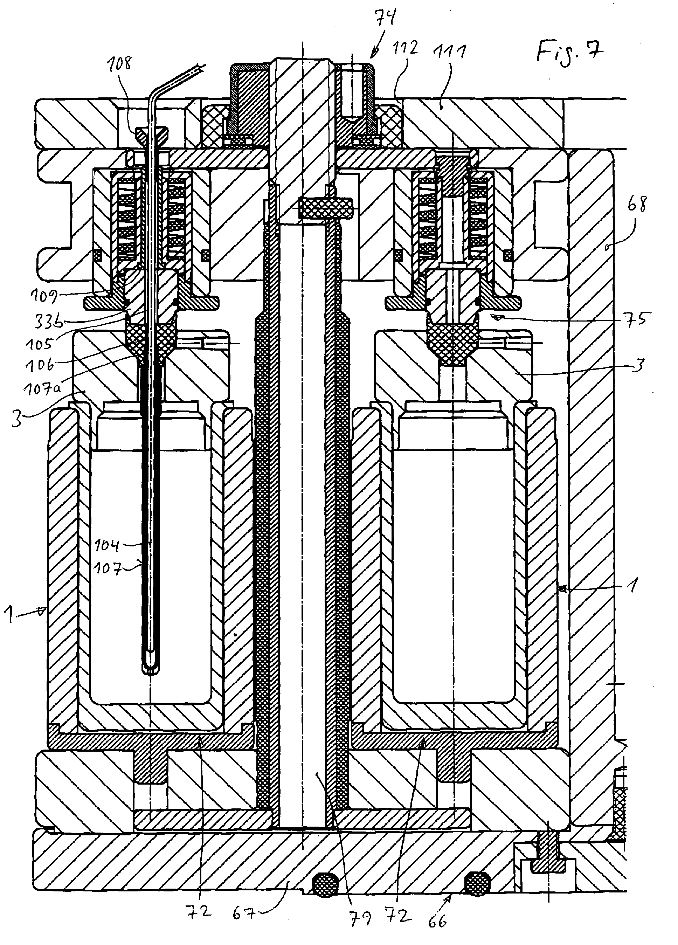

Das Ausführungsbeispiel nach Fig. 7 unterscheidet sich von den nach Fig. 6 lediglich dadurch, dass ein Temperaturfühler 104 in Form einer stiftförmigen Sonde vorgesehen ist, der das Oberteil 81 im Bereich der Verbindungshülse 97, eines Durchführungsloches 105 in der Ventilkörperbasis 33b und eines Durchführungsloches 106 im Ventilkörper 33 durchsetzt. Der Temperaturfühler 104 kann von einer hülsenförmigen Schutzkappe 107 umgeben sein, die in eine Locherweiterung 107 im Ventilkörper 33 eingesetzt und gehalten ist. Für eine Montage des Temperaturfühlers 104 wird der Stift 98 entfernt, und kann durch eine Einführungshülse 108 ersetzt sein, die in eine Innenhülse 109 eingesetzt ist, die den Temperaturfühler 104 und eine Verbindungsleitung desselben mit Abstand umgibt und in der Verbindungshülse eingesetzt ist.

Für einen Aufschlussvorgang können die Aufschlussbehälter 1 außerhalb des Bestrahlungsraums 54 mit Probenmaterial beschickt werden. Die Aufschlussbehälter 1 können in die Trägersegmente 71 eingesetzt werden und mit diesen auf dem Rotorträger positioniert werden oder bei auf dem Rotorträger 66 befindlichen Trägersegmenten 71 darin eingestellt werden. Danach wird das Oberteil 81 durch ein Abschrauben der Gewindemutter 85 auf die Deckel 3 oder auch auf die Ventilkörper 33 abgesenkt. Dabei kann durch ein gezieltes Herunterschrauben gegen die Federspannung der Feder 35 ein im Bereich des Verstellweges v wählbarere Öffnungsdruck vorgewählt werden, bei dessen Überschreitung das Ventil selbsttätig öffnet. Es kann auch das Oberteil 81 mit den Flanschen direkt gegen den Deckel 3 herabbewegt werden, wodurch ein maximaler Öffnungsdruck eingestellt wird. Im Übrigen funktioniert die Abblasvorrichtung 75 wie beim Ausführungsbeispiel nach Fig. 3.

Die erfindungsgemäße Ausgestaltung führt zu mehreren Vorteilen.

Einer der Vorteile ist, dass die Anzahl der Stellplätze 53 vergrößert werden kann. Dieser Vorteil betrifft die Vorrichtung 1 insofern, als die erfindungsgemäße Ausgestaltung die Anordnung von Aufschlussbehältern 1 nicht nur in einer Umfangsreihe R1 sondern auch in einer bzgl. letzterer nach innen versetzten zweiten Umfangsreihe R2 angeordnet werden können. Es wird somit auch der innerhalb der äußeren Umfangsreihe R1 vorhandene Raum für Stellplätze 53 bzw. Aufschlussbehälter 1 ausgenutzt. Die Zugänglichkeit zu den inneren Stellplätzen 53 ist z.B. durch ein Hindurchbewegen über die äußeren Stellplätze 53 gewährleistet. Beim Ausführungsbeispiel ist die Zugänglichkeit zu den inneren Stellplätzen 53 dadurch gewährleistet, dass die Trägersegmente 71 eingestellt und entnommen werden können.

Die erfindungsgemäße Anordnung mehrerer Stellplätze 53 bzw. Aufschlussbehälter 1 auf den Trägersegmenten 71 führt zu einer wesentlichen Vereinfachung der Handhabung beim Bestücken der Trägersegmente 71, die sich außerhalb oder innerhalb der Vorrichtung 1 befinden können, und/oder beim Einsetzen in die Vorrichtung 1 durch die vorbestückten Trägersegmente 71. Diese lassen sich ebenfalls handhabungsfreundlich und einfach in der Vorrichtung 1 positionieren, da die Einstellbewegung nach innen durch Anschlag an der Zentralsäule 68 begrenzt ist und weitere Trägersegmente 71 durch die Begrenzung der Tragsäule 68 und die seitliche Begrenzung eines benachbarten Trägersegments 71 einfach und gezielt positioniert werden können.

Eine weitere Vereinfachung der Handhabung besteht beim Einstellen des maximalen Innendrucks darin, dass mehrere Aufschlussbehälter 1 gleichzeitig verschlossen und eingestellt und oder wieder geöffnet werden können.

Die vorbeschriebene Positionierung der Trägersegmente 71 in der Vorrichtung 1 auf Grund der Segmentform ist gewährleistet, wenn die Basis 78 und/oder das Oberteil 81 in vorbeschriebener Weise keilförmig geformt ist bzw. sind. Diese Beschreibung der Form gilt deshalb auch für das Oberteil 81.

Beim Ausführungsbeispiel nach Fig. 7 ist nicht allen Aufschlussbehältern 1 ein Temperaturfühler 104 zuzuordnen, da eine diesbezügliche Aufschlussfunktion nicht immer gewünscht ist. Im Rahmen der Erfindung können jedoch auch alle Abblasvorrichtungen 95 bzw. Druckvorrichtungen so ausgebildet sein, dass ein Temperaturfühler 104 wahlweise montierbar ist.

Wie bereits bei den vorbeschriebenen Ausgestaltungen bestehen auch beim Ausführungsbeispiel noch Fig. 6 und 7 des Federgehäuses 96 und die Verbindungshülse 97 aus Metall, wobei sie die aus Federstahl bestehende Feder 35 vor einer Erwärmung durch die Mikrowellen schützen. Im Übrigen bestehen die Einzelteile der Vorrichtung 1 auch bei diesem Ausführungsbeispiel aus Kunststoff.

Mit 111 ist eine auf den Trägersegmenten 71 aufliegende Zentrierscheibe bezeichnet, die mit passenden Löchern 112 die mit Angriffselementen für einen Drehschlüssel aufweisende Gewindemutter 82 oder den sie umgebenden Haltering umgibt.

Die Seitenflächen 76 der Basis 78 und/oder des Oberteils 1 schließen vorzugsweise einen Winkel W von 60° ein. Die beim Ausführungsbeispiel sechs Stück vorhandenen Trägersegmente 71 sind einander gleich.

## Patentansprüche

1. Vorrichtung (51) zum Verschließen mehrerer Aufschlussbehälter (1), deren Öffnung jeweils durch einen Deckel (3) abgedeckt ist, mit
- einer Mehrzahl Stellplätze (53) für die Aufschlussbehälter(1), wobei die Stellplätze (53) auf einer Umfangsreihe (R1) verteilt angeordnet werden können und von außen zugänglich sind,
- und einer Mehrzahl Verschlussvorrichtungen (73) zum Drücken der Deckel (3) gegen die Behälter,
**dadurch gekennzeichnet,**
**dass** von den Stellplätzen (53) nach innen versetzt weitere innere Stellplätze (53) angeordnet sind.

2. Vorrichtung nach Anspruch 1,
**dadurch gekennzeichnet,**
**dass** die inneren Stellplätze (53) sich auf einer diametralen Linie (...) befinden, die sich zwischen den beiden benachbarten äußeren Stellplätzen (53) erstreckt.

3. Vorrichtung nach Anspruch 1 oder 2,
**dadurch gekennzeichnet,**
**dass** wenigstens zwei äußere Stellplätze (53) und wenigstens ein innerer Stellplatz (53) auf einem Trägersegment (71) angeordnet sind.

4. Vorrichtung nach Anspruch 3,
**dadurch gekennzeichnet,**
**dass** der Segmentträger (71) eine für seine Stellplätze (53) gemeinsame Verschlussvorrichtung aufweist.

5. Vorrichtung nach einem der vorherigen Ansprüche,
**dadurch gekennzeichnet,**
**dass** für jeden Stellplatz ein elastisches Druckmittel (8) zum Drücken des Deckels (3) gegen den Behälter vorgesehen und/oder eine Ablassvorrichtung (75) vorgesehen ist, die bei einem einen bestimmten überschreitenden Innendruck selbsttätig öffnet.

6. Trägersegment (71) zum Verschließen mehrerer Aufschlussbehälter (1), deren Öffnungen jeweils durch einen Deckel (3) abgedeckt sind, mit einem Stellplatz (53) über dem eine Verschluss eine Vorrichtung zum Drücken des Deckels (3) gegen den Behälter angeordnet ist, wobei zwei aneinander gegenüberliegende Seitenflächen des Trägersegmentes (71) sich keilförmig erstrecken
**dadurch gekennzeichnet,**
**dass** das Trägersegment (71) wenigstens drei Stellplätze (53) aufweist, wobei zwei Stellplätze (53) zu beiden Seiten einer Winkelhalbierenden (w) der Keilform und im divergenten Bereich des Trägersegments (71) angeordnet sind und ein Stellplatz (53) im schmalen Bereich des Trägersegments (71) angeordnet ist, wobei das Trägersegment (71) eine sich zwischen den Stellplätzen (53) nach oben erstreckende Tragsäule (79) aufweist, die die Verschluss eine Vorrichtung (73) trägt.

7. Trägersegment nach Anspruch 6 oder 7,
**dadurch gekennzeichnet,**
**dass** eine gemeinsame Verschlussvorrichtung (73) für die Aufschlussbehälter (1) vorgesehen ist.

8. Trägersegment nach Anspruch 6 oder 7,
**dadurch gekennzeichnet,**
**dass** die Trägersäule (79) eine die Stellplätze (53) tragende Basis (78) und ein die Trageinreichtung aufweisendes Oberteil (8!9 verbindet, von dem die Basis (78) und/oder Oberteil (81) die Keilform aufweisen.

9. Vorrichtung (51) zum Verschließen mehrerer Aufschlussbehälter (1), deren Öffnung jeweils durch einen Deckel (33) abgedeckt ist, mit einer Mehrzahl Stellplätze (53) für die Aufschlussbehälter (1), wobei die Stellplätze (53) um eine zentrale Tragsäule (79) verteilt angeordnet sind,
**dadurch gekennzeichnet,**
**dass** eine gemeinsame Verschlussvorrichtung (73) für die Aufschlussbehälter (1) vorgesehen ist, die durch ein Schraubteil vertikal verstellbar ist, dass im oberen Endbereich der Tragsäule (79) gelagert ist, und dass zwischen der gemeinsamen Verschlussvorrichtung (73) und dem Schraubteil ein eine axiale Schraubkraft aufnehmendes Wälzlager angeordnet ist.

10. Vorrichtung nach Anspruch 9,
**dadurch gekennzeichnet,**
**dass** das Schraubteil eine Gewindemutter (82) ist, die auf die Tragsäule (79) aufgeschraubt ist.

11. Vorrichtung nach Anspruch 10,
**dadurch gekennzeichnet,**
**dass** in die Verschlussvorrichtung (73) eine horizontale Scheibe aus einem festerem Material, z.B. aus Stahl als das übrige Material der Verschlussvorrichtung (73) aufweist und das Wälzlager (94) zwischen der Scheibe und den Schraubteilen angeordnet ist.

12. Vorrichtung (5) zum Verschließen eines topfförmigen Aufschlussbehälters (1), dessen Öffnung durch einen Deckel (3) abgedeckt ist, mit
- einem Druckstempel (6),
- einem koaxial zum Druckstempel (6) angeordneten Schraubteil (7),
- und einem zwischen dem Druckstempel (6) und dem Schraubteil (7) angeordneten elastischen Druckmittel (8),
**dadurch gekennzeichnet,**
**dass** das Schraubteil (7) und der Druckstempel (6) einander muffenförmig übergreifen.

13. Vorrichtung nach Anspruch 12,
**dadurch gekennzeichnet,**
**dass** sich vom Schraubteil (7) eine den Druckstempel (6) übergreifende Ringwand (7c) erstreckt, die vorzugsweise einteilig mit dem Schraubteil (7) verbunden ist.

14. Vorrichtung nach Anspruch 12 oder 13,
**dadurch gekennzeichnet,**
**dass** zwischen der Ringwand (7c) und dem Druckstempel (6) eine Ringdichtung (13) angeordnet ist.

15. Vorrichtung nach Anspruch 14,
**dadurch gekennzeichnet,**
**dass** die Ringdichtung (13) durch einen Dichtring (13a) aus elastischem Material gebildet ist, der in einer Ringnut in der Innenmantelfläche der Ringwand (7c) oder in der Außenmantelfläche des Druckstempels (6) sitzt.

16. Vorrichtung (5) zum Verschließen eines topfförmigen Aufschlussbehälters (1), dessen Öffnung durch einen Deckel (3) abgedeckt ist, mit
- einem Druckstempel (6),
- einem den Druckstempel (6) kappenförmig übergreifenden Schraubteil (7), das in seinem unteren Randbereich ein Schraubgewinde aufweist, mit dem es mit einem Widerlager (9) verschraubbar ist, das den Aufschlussbehälter (1) umgibt,
**dadurch gekennzeichnet,**
**dass** das Widerlager (9) durch einen Stützring (25) gebildet ist, der am Umfang des Aufschlussbehälters (1) an diesem fixiert ist.

17. Vorrichtung nach Anspruch 7,
**dadurch gekennzeichnet,**
**dass** der Aufschlussbehälter (1) an seinem Rand einen Flansch (1c) aufweist und der Stützring (25) auf der Außen-Mantelfläche des Aufschlussbehälters (1) befestigt ist und/oder den Flansch (1c) untergreift und/oder am Flansch (1c) angeformt ist.

18. Vorrichtung nach einem der vorherigen Ansprüche,
**dadurch gekennzeichnet,**
**dass** das elastische Druckmittel (8) durch eine oder mehrere aufeinander gestapelte Tellerfedern oder eine Wendelfeder gebildet ist.

19. Vorrichtung nach einem der vorherigen Ansprüche,
**dadurch gekennzeichnet,**
**dass** zwischen dem Schraubteil (7) und dem Widerlager (9) eine Positionsmarkierung angeordnet ist, z. B. eine Skala und einen Index.

20. Vorrichtung (5) zum Verschließen eines topfförmigen Aufschlussbehälters (1), dessen Öffnung durch einen Deckel (3) verschließbar ist, der vorzugsweise mit einem Verschlussteil (7) gegen den Deckel (3) spannbar ist,
**dadurch gekennzeichnet,**
**dass** der Deckel (3) einen ihn durchsetzenden Auslasskanal (31) aufweist, der durch ein Ventil (32) geschlossen ist, das den Auslasskanal (31) bei einem einen bestimmten Wert übersteigenden Innendruck im Aufschlussbehälter (1) selbsttätig öffnet.

21. Vorrichtung nach Anspruch 20,
**dadurch gekennzeichnet,**
**dass** der Auslasskanal (31) von innen nach außen axial, insbesondere koaxial, verläuft und das Ventil (32) einen Ventilkörper (33) aufweist, der größer ist als der Auslasskanal (31) und durch eine Feder (35) gegen einen Rand des Auslasskanals (31) vorgespannt ist.

22. Vorrichtung nach Anspruch 21,
**dadurch gekennzeichnet,**
**dass** der Rand durch die Stufenfläche (31d) einer Kanalerweiterung (31c) des Auslasskanals (31a) gebildet ist.

23. Vorrichtung nach Anspruch 22,
**dadurch gekennzeichnet,**
**dass** oberhalb der Stufenfläche (31d) ein Auslasskanalabschnitt (31b) im Deckel (3) abzweigt.

24. Vorrichtung nach einem der vorherigen Ansprüche 21 bis 23,
**dadurch gekennzeichnet,**
**dass** vom Ventilkörper (33) ein Ventilkörperzapfen (33a) nach unten absteht, der mit geringem Bewegungsspiel in den Auslasskanal (31a) einfasst.
